Europäisches Patentamt

European Patent Office

Office européen des brevets

(19)

(11) **EP 0 840 481 A1**

(12) **DEMANDE DE BREVET EUROPEEN**

(43) Date de publication:
**06.05.1998 Bulletin 1998/19**

(51) Int Cl.⁶: **H04L 12/56**

(21) Numéro de dépôt: **97402581.9**

(22) Date de dépôt: **30.10.1997**

(84) Etats contractants désignés:
**AT BE CH DE DK ES FI FR GB GR IE IT LI LU MC NL PT SE**
Etats d'extension désignés:
**AL LT LV RO SI**

(30) Priorité: **31.10.1996 FR 9613317**

(71) Demandeur: **SAT (Société Anonyme de Télécommunications)**
**75116 Paris (FR)**

(72) Inventeur: **Le Gourrierec, Marc**
**75013 Paris (FR)**

(74) Mandataire: **Bloch, Gérard**
**2, square de l'Avenue du Bois**
**75116 Paris (FR)**

(54) **Procédé d'émission de données sur un réseau ATM**

(57)   Le procédé d'émission de données, depuis un appareil d'émission (1-3), sur un réseau ATM agencé pour recevoir des cellules de données selon une période de répétition non inférieure à une période déterminée et pour recevoir en outre un nombre de cellules en rafale pouvant atteindre un nombre maximal déterminé consiste à :

-   allouer à l'appareil (1-3) un crédit d'émission d'un nombre de cellules en fonction du nombre maximal de cellules en rafale, puis

-   on décrémente le crédit alloué d'une unité à chaque émission d'une cellule et on l'incrémente d'une unité à chaque période minimale écoulée et

-   en n'autorisant une émission, à un instant donné, que si le crédit restant est d'au moins une cellule.

F I G U R E   1

EP 0 840 481 A1

# Description

La transmission de données entre deux appareils reliés par un réseau de commutation obéit à des règles qui diffèrent de celles régissant une communication téléphonique. En effet, les appareils de transmission de données ont un trafic sporadique, ou asynchrone, et il est exclu, économiquement, d'établir une connexion permanente entre eux, pour en fait ne l'utiliser qu'une faible partie du temps, car cela nécessiterait un surdimensionnement du réseau.

Les opérateurs de tels réseaux ont donc développé des réseaux de transmission par paquets de données, dans lesquels l'appareil émetteur injecte un paquet de données, comportant aussi l'adresse du destinataire, et relâche ensuite la liaison d'accès au réseau. Ce dernier, constitué d'un maillage de commutateurs, ou noeuds du réseau, analyse l'adresse à chaque noeud traversé et aiguille, de proche en proche, le paquet jusqu'au noeud de rattachement du destinataire. Le réseau peut ainsi être dimensionné en fonction du seul trafic réel, par mise en commun, ou partage temporel, des liaisons du réseau.

Il est cependant apparu des besoins nouveaux, liés à la diversité des débits à écouler et des rythmes de récurrence des paquets. En effet, la transmission d'un paquet de grande taille immobilisera relativement longtemps une liaison, si bien qu'un autre appareil subira un temps d'attente prohibitif, même s'il n'a que peu de données à émettre. Pour remédier à ce problème a été développée la technique du Mode de Transfert Asynchrone (ATM), dans laquelle on découpe, avant leur émission, les paquets en paquets de taille réduite et normée, appelés cellules. Lorsque plusieurs appareils doivent émettre sur une même liaison du réseau ATM, ils sont successivement autorisés à émettre une cellule, si bien que le temps maximal d'accès est celui du cycle de scrutation d'un circuit d'interface adaptateur de débit, relié au réseau, et ne dépend plus de la taille des paquets des autres terminaux.

Comme indiqué ci-dessus, le réseau est dimensionné en fonction du seul trafic réel, avec une surcapacité de sécurité pour absorber ses fluctuations. Le coût de la souscription d'un abonnement au réseau croît avec le rythme de trafic réel que déclare l'abonné, c'est-à-dire l'inverse de la période de répétition des cellules émises. En d'autres termes, l'opérateur alloue à l'abonné, sur une artère à haut débit déterminé, un pourcentage d'occupation temporelle de celle-ci. En pratique, cela revient à fixer la période minimale, ou cadence maximale, de répétition de l'émission des cellules successives. L'émission de celles-ci intervient toujours à la vitesse maximale de modulation prévue pour l'artère, et ce sont donc les tranches de temps mort entre deux émissions successives qui règlent ce pourcentage.

Pour éviter tout engorgement du réseau, l'abonné doit respecter cette période minimale, même si l'artère lui permettrait, physiquement, de dépasser la cadence autorisée, en utilisant les tranches de temps mort. L'abonné peut cependant être autorisé à émettre exceptionnellement un nombre accru, ou rafale, de cellules, de temps en temps.

En cas de non respect de ces limites de trafic, les cellules excédentaires sont détruites par le réseau.

Or, comme indiqué, le trafic des appareils étant sporadique, l'équipement d'interface avec le réseau doit pouvoir effectuer un lissage temporel pour tenter d'étaler dans le temps le trafic des crêtes excédant les limites contractuelles fixées.

EP-A-529 351 rappelle ainsi, pour la réception de données, le principe connu du "leacky bucket" (littéralement "seau qui fuit"), consistant à attribuer, à un terminal récepteur, un crédit de réception d'un nombre déterminé de cellules. La perte de crédit liée à la réception de chaque cellule tend à être compensée par un flux continu de crédit réglé pour permettre des réceptions séparées en moyenne par un intervalle de temps déterminé. En outre, ce document met en évidence le fait que le leacky bucket élimine des cellules de façon injustifiée et propose un double leacky bucket pour modifier le leacky bucket classique afin d'en éviter l'inconvénient évoqué ci-dessus.

La présente invention vise à résoudre le problème du respect des crêtes en émission, tout en restant dans le cadre du leacky bucket, dont les résultats sont communément jugés satisfaisants.

A cet effet, l'invention concerne un procédé d'émission de données, depuis au moins un appareil d'émission, sur un réseau ATM agencé pour recevoir des cellules de données selon une période de répétition, d'une cellule à la suivante, non inférieure à une période déterminée et pour recevoir en outre un nombre de cellules en rafale pouvant atteindre un nombre maximal déterminé, caractérisé par le fait que :

- on alloue à l'appareil, à un instant initial, un crédit d'émission d'un nombre de cellules en fonction du nombre maximal de cellules en rafale, puis

- on décrémente le crédit alloué d'une unité à chaque émission d'une cellule et on l'incrémente d'une unité à chaque période minimale écoulée et

- en n'autorisant une émission, à un instant donné, que si le crédit restant est d'au moins une cellule.

Ainsi, le procédé de l'invention permet de réaliser un bon équilibre entre les émissions à rythme normal, respectant la période de répétition minimale, et les émissions en rafales, puisque l'émission d'une rafale consommant tout le crédit interdit à court terme toute émission de cellule jusqu'à remontée du crédit à la valeur unité et, à moyen terme, toute émission d'une rafale tant que le crédit n'a pas été reconstitué. Il s'agit donc d'une régulation par intégration des débits.

On remarquera que l'invention s'applique aussi bien à l'émission de cellules vers le réseau qu'au cheminement de ces cellules entre les noeuds du réseau.

L'invention sera mieux comprise à l'aide de la description suivante d'un mode de mise en oeuvre préféré du procédé de l'invention, en référence au dessin annexé, sur lequel :

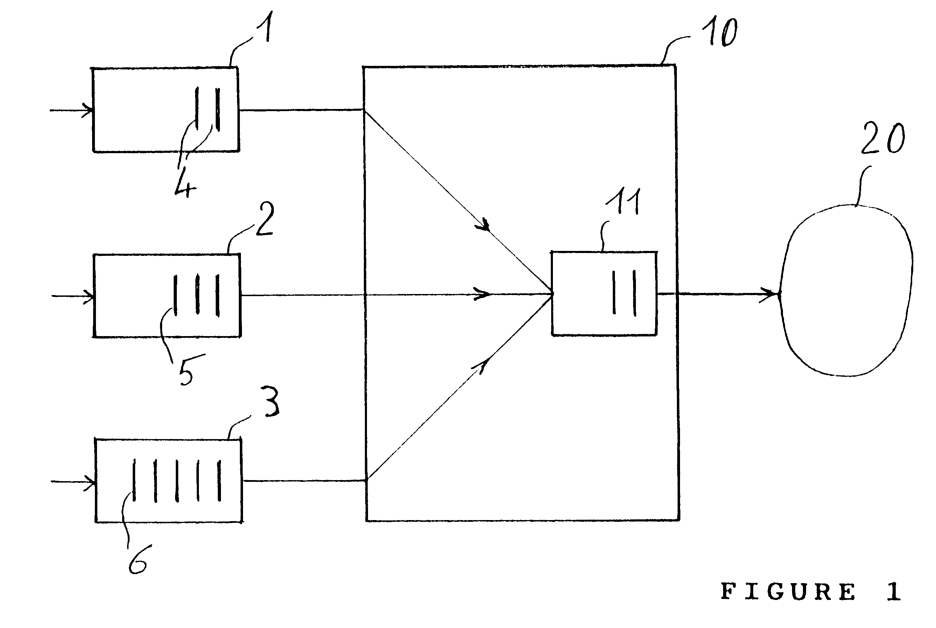

- la figure 1 représente schématiquement un circuit d'interface d'adaptation de débit ATM reliant plusieurs terminaux émetteurs à un réseau ATM, et

- les figures 2 et 3 sont des diagrammes temporels illustrant l'émission des cellules.

Le circuit d'interface, portant la référence 10, sert ici au raccordement d'une pluralité de trois terminaux 1, 2 et 3 à un réseau ATM 20, c'est-à-dire qu'il sert ici de multiplexeur et d'adaptateur de débit. Les terminaux 1 à 3 sont chacun représentés très schématiquement par une mémoire FIFO de sortie (premier entré, premier sorti) contenant une pile de paquets 4 à 6 respectifs de diverses tailles en attente d'émission sur le réseau 20. Le circuit 10 comporte ici une petite pile de cellules ou tampon 11 de sortie sur le réseau 20. De façon classique, le circuit 10 est agencé pour découper les paquets 4 à 6 en cellules de 48 octets et pour y adjoindre un en-tête de 5 octets comportant entre autres une indication de l'adresse du destinataire, associée au paquet 4 à 6.

Lorsque le tampon 11 comporte un emplacement de cellule disponible, après une émission sur le réseau 20 ou lors de son remplissage initial, le terminal 10 sélectionne, ou élit, l'un des terminaux 1-3 pour y prélever 48 octets en sortie de sa pile 4-6 et les transmettre au tampon 11, où ils seront émis à court terme sur le réseau 20. Ainsi, en régime établi, les cellules étant émises depuis la pluralité d'appareils d'émission 1-3, et à travers le tampon 11 d'accès au réseau ATM 20 adapté à ce réseau, on scrute les différents appareils 1-3 et on n'autorise le transfert dans le tampon d'accès 11 d'une cellule d'un des appareils 1-3 qu'à l'émission d'une cellule sur le réseau 20.

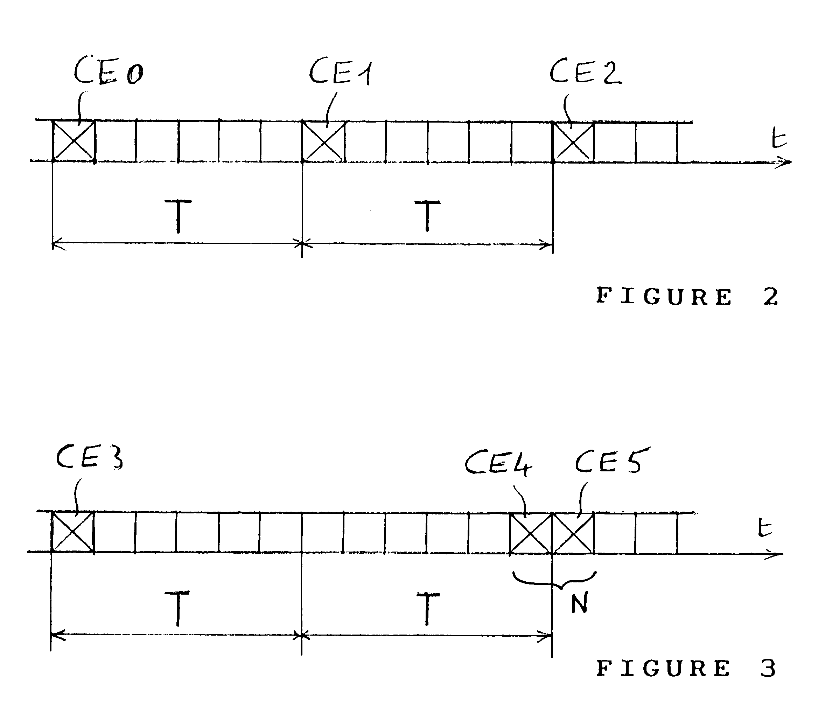

En pratique, on définit (figure 2):

T : période minimale de répétition de l'émission des cellules, dont l'inverse est souvent appelé débit crête de cellules (Peak Cell Rate),

N : nombre maximal de cellules pouvant être émises en rafale,

qui sont souscrits par l'utilisateur du circuit 10 auprès de l'opérateur du réseau 20;

C : crédit calculé, sous forme d'un nombre maximal de cellules pouvant être émises à un instant donné,

ta : instant de début de la dernière émission du terminal 1-3 considéré,

tp : instant présent

$X =$ $(tp - ta) / T$, variable de calcul.

L'élection ci-dessus procède de l'algorithme suivant :

- on alloue à l'appareil 1-3, à un instant initial, un crédit C d'émission d'un nombre de cellules en fonction du nombre maximal de cellules en rafale N, puis

- on décrémente le crédit alloué C d'une unité à chaque émission d'une cellule et on l'incrémente d'une unité à chaque période minimale T écoulée et

- en n'autorisant une émission, à un instant donné, que si le crédit restant C est d'au moins une cellule.

On contrôle donc, à la source (1 - 3), les émissions de cellules et respecte ainsi le principe du leacky bucket, avec les paramètres du débit T et N alloués aux appareils 1 - 3.

Cet algorithme revient en pratique à une scrutation cyclique, au fil de l'eau, pour détecter une cellule à émettre.

Cette scrutation n'a d'intérêt que lorsque le crédit atteint au moins une cellule et l'émission intervient alors à court terme.

En d'autres termes, l'autorisation d'émission intervient a posteriori par rapport au fait générateur constitué par le franchissement du seuil de crédit correspondant à une cellule.

L'algorithme ci-dessus présente l'intérêt d'une grande simplicité par rapport à un algorithme qui établirait, lorsque le crédit est insuffisant, des dates prévisionnelles d'émission. Il faudrait les mémoriser dans un agenda s'étendant jusqu'au long terme, si le crédit ne croissait que lentement, et éventuellement remettre en cause les dates prévisionnelles en fonction de priorités entre cellules.

Au contraire, dans l'algorithme de l'invention, le temps n'intervient que pour déterminer l'ordre relatif d'événements : franchissement du seuil et émission, et la notion de durée n'intervient pas, hormis pour la reconstitution du crédit C. La seule "trace" d'une émission est le fait que le crédit a été réduit.

Sur la figure 2, où le temps t est porté en abscisse, les cellules CE0, CE1 et CE2 sont séparées par cinq intervalles de temps utilisables par d'autres appareils, représentant chacun la durée d'émission d'une cellule (temps cellule). La période de répétition des cellules CE0-CE2 correspond à la période T, fixée ici à six temps cellule.

Sur la figure 3, les cellules CE3 et CE4 sont séparées par dix temps cellule, tandis que les cellules CE4 et CE5 ne présentent pas, entre elles, l'espacement requis de cinq temps cellule, puisqu'elles sont ici accolées. Elles constituent donc une rafale (N = 2).

A un instant initial, ici le début de la transmission au tampon 11 de la première cellule du terminal 1-3 considéré, on fixe un crédit :

$$C(j=0) = N$$

puis on décrémente C d'une unité à chaque émission de cellule, par calcul de :

$$C(j=1) = C(j=0) - 1$$

De même, la valeur du dernier instant ta est actualisée à la valeur tp.

Par ailleurs, et indépendamment de toute émission, on incrémente la valeur courante de C, c'est-à-dire qui a éventuellement été décrémentée comme indiqué ci-dessus lors d'une émission, pour que, chaque fois qu'une durée égale à la période T s'est écoulée, cette valeur courante de C ait augmenté d'une unité. Cette augmentation du crédit C par période T peut intervenir par ajout d'une unité à la fin de chaque période T. Dans cet exemple, par contre, cette incrémentation est progressive, en croissant selon X de 0 à 1 du début à la fin de la période T et se poursuit sur les suivantes éventuelles. C'est-à-dire qu'ayant mémorisé les instants d'émission des cellules, on calcule l'incrément par détermination du retard de l'instant présent tp par rapport à l'instant d'émission de la dernière cellule émise ta, retard rapporté à la valeur de la période minimale de répétition T. De ce fait, C est déterminé par la formule suivante :

$$Cj = C(j-1) + X$$

avec j : rang de la cellule du terminal 1-3 considéré.

On peut ainsi effectuer un lissage des émissions successives pour respecter la valeur minimale de répétition des émissions de cellules, c'est-à-dire la valeur maximale fixée par le débit crête de cellules. Cela permet en particulier de souscrire un abonnement pour un débit crête réduit, donc à un coût plus faible.

Le procédé de l'invention est en fait applicable à tout réseau recevant sporadiquement, c'est-à-dire de manière asynchrone, et transmettant des blocs de données, les cellules dans l'exemple ci-dessus, de longueur fixe ou variable, imposant les contraintes de trafic N et T exposées ci-dessus. De ce fait, au sens de l'invention, un réseau ATM est un réseau asynchrone tel que défini ci-dessus et une cellule est, d'une façon générale, un bloc de données.

Dans cet exemple, on autorise le transfert dans le tampon 11 des cellules d'un même appareil 1-3 tant que le tampon 11 peut en recevoir. Cependant, afin de respecter le maximum N d'émissions en rafale, on limite ici, ou écrête, à cette valeur, le nombre d'émissions enchaînées en rafale. Bien que l'on puisse cependant conserver, pour la suite de l'itération, la valeur Cj excédant N, on préfère ici mémoriser l'écrêtage ci-dessus et utiliser cette valeur écrêtée pour la suite. La formule de mise à jour ci-dessus devient ainsi :

$$Cj = Min < C(j-1) + X, N >$$

c'est-à-dire la plus petite des deux valeurs encadrées.

Afin d'éviter, si on le souhaite, les envois d'une rafale à l'instant initial, on peut en fait fixer initialement C (j = 0) à toute valeur comprise entre 0 et N, c'est-à-dire que C(j = 0) est fonction de N mais qu'il peut y être inférieur.

Lorsque l'appareil 1-3 considéré n'a pas de données à émettre ou qu'il ne dispose pas d'un crédit suffisant pour émettre, le circuit 10 scrute les autres appareils 1-3, par exemple dans un ordre de priorités respectives.

Dans un but de simplification des calculs de X, et en particulier pour éviter la division ci-dessus par T fournissant X, on procède ici à un changement d'unités de temps, c'est-à-dire que l'on utilise comme nouvelle unité, remplaçant un nombre de cellules, la durée d'émission d'une cellule ou encore, comme ci-dessous, la période H d'une horloge du circuit 10 :

Tmax :    Tmax : équivalent du nombre N, exprimé en périodes minimales de répétition de N cellules, soit N . T,

Tcr :      équivalent du nombre C, exprimé en temps

T:         en nombre de périodes H

A l'initialisation, on fixe le temps de crédit à la valeur :

$$Tcr = Tmax$$

puis ensuite, pour déterminer si une émission de rang j peut avoir lieu :

$$Tcr(j) = Min < (tp - ta + Tcr (j-1)), Tmax >$$

et on émet une cellule si Tcr > = T
pour ensuite ajuster le temps restant de crédit à la valeur :

$$Tcr - T$$

## Revendications

1.  Procédé d'émission de données, depuis au moins un appareil d'émission (1-3), sur un réseau ATM agencé pour recevoir des cellules de données selon une période de répétition, d'une cellule à la suivante, non inférieure à une période déterminée (T) et pour recevoir en outre un nombre de cellules en rafale pouvant atteindre un nombre maximal déterminé (N), caractérisé par le fait que :

-   on alloue à l'appareil (1-3), à un instant initial, un crédit (C) d'émission d'un nombre de cellules en fonction du nombre maximal de cellules en rafale (N), puis

-   on décrémente le crédit alloué (C) d'une unité à chaque émission d'une cellule et on l'incrémente d'une unité à chaque période minimale (T) écoulée et

-   en n'autorisant une émission, à un instant donné, que si le crédit restant (C) est d'au moins une cellule.

2.  Procédé selon la revendication 1, dans lequel on écrête le crédit (C) au nombre maximal déterminé (N).

3.  Procédé selon l'une des revendications 1 et 2, dans lequel, à l'intérieur de chaque période minimale (T), on incrémente progressivement le crédit (C) après chaque émission.

4.  Procédé selon la revendication 3, dans lequel on mémorise les instants d'émission des cellules et on calcule l'incrément par détermination du retard de l'instant présent (tp) par rapport à l'instant d'émission de la dernière cellule émise (ta), retard rapporté à la valeur de la période minimale de répétition (T).

5.  Procédé selon l'une des revendications 1 à 4, dans lequel on convertit les nombres N et C en nombre d'unités de temps.

6.  Procédé selon la revendication 5, dans lequel l'unité de temps est une période d'horloge (H).

7.  Procédé selon l'une des revendications 1 à 6, dans lequel, les cellules étant émises depuis la pluralité d'appareils d'émission (1-3), et à travers un tampon (11) d'accès au réseau ATM (20) adapté à ce réseau, on scrute les différents appareils (1-3) et on n'autorise le transfert dans le tampon d'accès (11) d'une cellule d'un des appareils (1-3) qu'à l'émission d'une cellule sur le réseau (20).

8.  Procédé selon la revendication 7, dans lequel on autorise le transfert dans le tampon (11) des cellules d'un même appareil (1-3) tant que le tampon (11) peut en recevoir.

9.  Procédé selon l'une des revendications 7 et 8, dans lequel on scrute les différents appareils (1-3) dans un ordre de priorités respectives.

10. Procédé selon l'une des revendications 7 à 9, dans lequel on suspend la scrutation lorsque le tampon (11) est plein.

EP 0 840 481 A1

FIGURE 1

EP 0 840 481 A1

CE0    CE1    CE2

T    T

t

**FIGURE 2**

CE3    CE4  CE5

T    T    N

t

**FIGURE 3**

# EP 0 840 481 A1

Office européen
des brevets

**RAPPORT DE RECHERCHE EUROPEENNE**

Numéro de la demande

EP 97 40 2581

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X<br>Y | EP 0 529 351 A (SIEMENS AG) 3 mars 1993<br>* page 2, ligne 32 - ligne 36 *<br>* page 2, ligne 41 - ligne 55 *<br>--- | 1,2,5,6<br>3,4,7-9 | H04L12/56 |
| Y | GB 2 287 854 A (GEN DATACOMM ADVANCED RESEARCH) 27 septembre 1995<br>* revendication 1 *<br>--- | 3,4 | |
| Y | CHAO H J ET AL: "A VLSI SEQUENCER CHIP FOR ATM TRAFFIC SHAPER AND QUEUE MANAGER"<br>IEEE JOURNAL OF SOLID-STATE CIRCUITS, vol. 27, no. 11, 1 novembre 1992, pages 1634-1643, XP000320793<br>* page 1636, colonne de gauche, ligne 17 - ligne 37 *<br>* page 1637, colonne de gauche, ligne 26 - colonne de droite, ligne 39 *<br>----- | 7-9 | |

**DOMAINES TECHNIQUES RECHERCHES (Int.Cl.6)**

H04L

Le présent rapport a été établi pour toutes les revendications

| Lieu de la recherche | Date d'achèvement de la recherche | Examinateur |
|---|---|---|
| LA HAYE | 9 février 1998 | Veen, G |